# EUROPÄISCHE PATENTSCHRIFT

(11) **EP 3 883 839 B1**
(45) Veröffentlichungstag und Bekanntmachung des Hinweises auf die Patenterteilung: **27.03.2024**
(21) Anmeldenummer: 19808773.6
(22) Anmeldetag: 21.11.2019
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR VÉHICULE AUTMOBILE

(30) Priorität: 23.11.2018 DE 102018220175
(43) Veröffentlichungstag der Anmeldung: 29.09.2021
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); KREUTZ, Daniel, 6800 Feldkirch (AT); BLÄTTLER, Simon, 9472 Grabs (CH)
(74) Vertreter: thyssenkrupp Intellectual Property GmbH
(86) Internationale Anmeldenummer: PCT/EP2019/082129
(87) Internationale Veröffentlichungsnummer: WO 2020/104608

(56) Entgegenhaltungen:
- EP-A1- 1 693 279
- EP-A1- 1 736 395
- EP-A2- 1 905 664
- DE-C1- 19 812 179

## Beschreibung

### Stand der Technik

Die Erfindung betrifft eine motorisch verstellbare Lenksäule für ein Kraftfahrzeug, umfassend eine mit einer Fahrzeugkarosserie verbindbare Trageinheit, von der eine Stelleinheit gehalten wird, die eine in einer Manteleinheit um eine Längsachse drehbar gelagerte Lenkspindel umfasst, wobei die Manteleinheit mindestens zwei relativ zueinander verstellbare Mantelrohre aufweist, die mit einem Verstellantrieb verbunden sind, der eine entlang ihrer Kuppelachse erstreckte Kuppelstange aufweist, die an relativ zueinander verstellbaren Mantelrohren angreift, und die mit einer motorischen Antriebseinheit wirkverbunden ist, und von der Antriebseinheit relativ zu mindestens einem der Mantelrohre verstellbar ist, wobei zwischen der Manteleinheit und der Kuppelstange eine Auslenkungsbegrenzungsvorrichtung angeordnet ist.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Manteleinheit drehbar gelagert, die von einer an der Fahrzeugkarosserie befestigten Trageinheit gehalten wird. Verstellbare Lenksäulen ermöglichen durch eine Verstellung der Manteleinheit eine Einstellung der Lenkradposition relativ zur Fahrzeugkarosserie.

Es ist bekannt, die Lenksäule in Längsrichtung, d.h. in Achsrichtung der Lenkspindel bzw. in Richtung der Längsachse, verstellbar zu gestalten, um im manuellen Fahrbetrieb das Lenkrad in Bedienposition für einen bequemen manuellen Lenkeingriff an die Fahrerposition anzupassen. Beim autonomen Fahren wird im autonomen Fahrbetrieb, wenn kein manueller Lenkeingriff erfolgt, die Lenksäule vorzugsweise so weit wie möglich längs zusammengefahren, um das Lenkrad in eine Verstauposition außerhalb der Bedienposition zu bringen, so dass der Fahrzeuginnenraum für eine anderweitige Nutzung freigegeben wird.

Zur Längsverstellung ist eine teleskopartige Anordnung von Mantelrohren der Stelleinheit bekannt, wie sie beispielsweise in der DE 10 2017 207 561 A1 beschrieben ist. Diese umfasst ein in Fahrtrichtung vorn an der Karosserie abgestütztes Außenmantelrohr oder äußeres Mantelrohr, in das ein Innenmantelrohr oder inneres Mantelrohr in Achsrichtung teleskopartig eintaucht. Zur Längsverstellung ist ein linearer motorischer Verstellantrieb vorgesehen, der als in Achsrichtung wirkender Spindeltrieb ausgebildet ist, der an den Mantelrohren angreift. Die Gewindespindel bildet dabei eine Kuppelstange, oder ist mit einer Kuppelstange verbunden, die sich zwischen zwei Mantelrohren erstreckt. Aus der Verstauposition, in der die Mantelrohre in Längs- bzw. Achsrichtung so weit wie möglich ineinander eingefahren sind, kann die Lenksäule mittels des Verstellantriebs durch motorische Bewegung der Kuppelstange bis in eine fahrerseitige Endposition verstellt werden, in der die Mantelrohre so weit wie möglich auseinander ausgefahren sind. Der maximale mögliche Verstellbereich zwischen Verstauposition und Endposition definiert den Verstellweg der Lenksäule.

Die DE 10 2017 207 561 A1 zeigt beispielhaft eine in vielfältigen Varianten bekannte Ausführung, bei welcher der Spindeltrieb außen neben dem Außenmantel angebracht ist. Dabei wird die Kuppelstange durch eine Gewindespindel gebildet, die sich entlang ihrer Kuppelachse, dies ist die Spindelachse, mit Abstand parallel zur Längsachse erstreckt. Die Länge der Kuppelstange, die ganz oder teilweise als Gewindespindel ausgebildet sein kann, wird durch den Verstellweg bestimmt, so dass insbesondere Lenksäulen für autonomen Fahrbetrieb mit großem Verstellweg eine relativ lange Kuppelstange bzw. Gewindespindel aufweisen.

Die im Betrieb in Längsrichtung auf die Lenksäule wirkenden Kräfte werden von dem zwischen den Mantelrohren angeordneten Verstellantrieb aufgenommen, wobei die Kuppelstange, also bei einem Spindeltrieb die Gewindespindel beim Verstellen, und wenn eine Kraft auf das Lenkrad ausgeübt wird, axial, in Richtung der Kuppel- bzw. Spindelachse belastet wird. Insbesondere im Crashfall, wenn bei einem Fahrzeugcrash ein Körper mit hoher Geschwindigkeit auf das Lenkrad aufprallt, wirkt auf die Kuppelstange, beispielsweise die Gewindespindel, eine hohe axiale Druckkraft. Durch die axiale Druckbelastung besteht insbesondere bei einer relativ langen Kuppelstange die Gefahr, dass sie aufgrund der durch die Knickspannung erzeugten Querkräfte seitlich ausweicht und verbogen wird. Wird infolge dessen die Gewindestange eines Spindeltriebs verbogen, läuft der Spindeltrieb schwergängig oder blockiert, so dass die Lenksäule nicht mehr verstellt werden kann. Dadurch kann die Sicherheit im Betrieb, und auch im Crashfall beeinträchtigt werden.

Aus der EP 1 736 395 A1 ist eine zwischen der Manteleinheit und der Kuppelstange angeordnete Auslenkungsbegrenzungsvorrichtung bekannt, welche eine zusätzliche axiale Abstützung der Gewindespindel ermöglicht, nicht jedoch auf die Gewindespindel wirkende, potentiell schädliche Querkräfte abfangen kann. In der EP 1 905 664 A2 wird eine mit der Gewindespindel zusammenwirkende Drehverhinderungsplatte beschrieben, welche zwar eine relative Verdrehung der Mantelrohre verhindert, jedoch die potentielle Biegebelastung der Gewindespindel erhöht.

Es wäre zwar grundsätzlich möglich, die Kuppelstange oder den Spindeltrieb für eine höhere Belastbarkeit entsprechend größer zu dimensionieren. Das würde jedoch eine Vergrößerung des Aufbaus und eine Gewichtserhöhung mit sich bringen, die im Fahrzeugbau nicht akzeptabel ist.

Angesichts der vorangehend erläuterten Problematik ist es eine Aufgabe der vorliegenden Erfindung, eine Lenksäule mit einem verbesserten Verstellantrieb anzugeben, der eine erhöhte Belastbarkeit und Fahrzeugsicherheit ermöglicht.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Erfindungsgemäß wird für eine motorisch verstellbare Lenksäule für ein Kraftfahrzeug, umfassend eine mit einer Fahrzeugkarosserie verbindbare Trageinheit, von der eine Stelleinheit gehalten wird, die eine in einer Manteleinheit um eine Längsachse drehbar gelagerte Lenkspindel umfasst, wobei die Manteleinheit mindestens zwei relativ zueinander verstellbare Mantelrohre aufweist, die mit einem Verstellantrieb verbunden sind, der eine entlang ihrer Kuppelachse erstreckte Kuppelstange aufweist, die an relativ zueinander verstellbaren Mantelrohren angreift, und die mit einer motorischen Antriebseinheit wirkverbunden ist, und von der Antriebseinheit relativ zu mindestens einem der Mantelrohre verstellbar ist, wobei zwischen der Manteleinheit und der Kuppelstange eine Auslenkungsbegrenzungsvorrichtung angeordnet ist, vorgeschlagen, dass die Auslenkungsbegrenzungsvorrichtung eine Auslenkung der Kuppelstange quer zur Kuppelachse begrenzt, wobei die Auslenkungsbegrenzungsvorrichtung eine Führungsöffnung aufweist, welche die Kuppelstange zumindest teilweise umgreift, wobei die Kuppelstange in der Führungsöffnung ein definiertes Spiel hat, so dass ein loser Formschluss in Querrichtung realisiert wird.

Erfindungsgemäß ist vorgesehen, dass die Auslenkungsbegrenzungsvorrichtung eine Führungsöffnung aufweist, welche die Kuppelstange zumindest teilweise umgreift.

Dadurch, dass die Kuppelstange in der Führungsöffnung ein definiertes Spiel hat, wird ein loser Formschluss in Querrichtung realisiert. Dabei kann durch den Betrag des Spiels die maximal mögliche und zulässige Auslenkung der Kuppelstange definiert vorgegeben werden. Das Spiel ermöglicht weiterhin, dass die Kuppelstange beim Verstellen der Lenksäule reibungsfrei (berührungslos) oder reibungsarm axial relativ zur Auslenkungsbegrenzungsvorrichtung bewegt werden kann. Dadurch wird die zum Verstellen erforderliche Kraft nicht beeinflusst.

Über die Kuppelstange sind die relativ zueinander teleskopierend verstellbaren Mantelrohre axial, d.h. in Richtung der Längsachse, miteinander verbunden. Die Kuppelstange ist in ihrer Längserstreckung mit ihrer Kuppelachse im Wesentlichen parallel zur Längsachse mit seitlichem, d.h. radialem Abstand zur Manteleinheit angeordnet. Unter im Wesentlichen parallel zur Längsachse wird eine Abweichung von ±10° gegenüber einem idealen parallelen Anordnung. Die Auslenkungsbegrenzungsvorrichtung stützt die Kuppelstange in einem Bereich, der im Stand der Technik frei neben den Mantelrohren verläuft, quer zur Kuppelachse, und damit auch quer zur Längsachse gegen die Manteleinheit ab. Die Abstützung durch die Auslenkungsbegrenzungsvorrichtung erfolgt bevorzugt in radialer Richtung, dies ist die Richtung des Abstands der Kuppelstange von der Längsachse, und auch in Umfangsrichtung, quer zur Richtung des genannten Abstands. Der Abstand der Kuppelstange zur Manteleinheit ist durch die Auslenkungsbegrenzungsvorrichtung innerhalb vorgegebener Toleranzgrenzen eingeschränkt.

Die Auslenkungsbegrenzungsvorrichtung ist in einem Stützbereich der Kuppelstange angeordnet, der sich im Stand der Technik zwischen den Angriffsstellen an den Mantelrohren frei erstreckt. Eine Gewindespindel weist diesen freien Bereich zwischen der Spindelmutter und der Verbindung mit einem Mantelrohr auf. Bei einer hohen Druckbelastung, beispielsweise im Crashfall, die im Stand der Technik durch die hohe Knickspannung und die dadurch wirkenden Querkräfte zu einer unkontrollierten Auslenkung führen könnte, wird die Kuppelstange durch die erfindungsgemäße Auslenkungsbegrenzungsvorrichtung seitlich gestützt, und die Auslenkung verhindert oder begrenzt. Dadurch kann eine Verbiegung im Wesentlichen vermieden, oder zumindest auf einen geringen, als zulässig tolerierbaren Wert begrenzt werden.

Als Kuppelstange ist prinzipiell ein entlang der Kuppelachse langgestrecktes Kraftübertragungselement geeignet, welches zur Übertragung der zwischen den Mantelrohren über den Verstellantrieb ausgeübten Verstellkraft geeignet ist. Dabei ist es vorteilhaft, dass der Verstellantrieb einen Spindeltrieb aufweist. Ein Spindeltrieb ist dadurch realisiert, dass die Kuppelstange eine Gewindespindel aufweist, die in eine Spindelmutter eingreift, und von der Antriebseinheit um ihre Spindelachse relativ zur Spindelmutter drehend antreibbar ist, wobei die Gewindespindel und die Spindelmutter an relativ zueinander verstellbaren Mantelrohren angreifen. Die Kuppelstange kann dabei durchgehend als Gewindespindel ausgebildet sein, oder mit einer Gewindespindel verbunden sein, beispielsweise durch ein Spindelgewinde in einem Teilabschnitt der Kuppelstange. Zur Realisierung einer Längsverstellung ist die Gewindespindel mit ihrer Spindelachse mit Abstand im Wesentlichen parallel zur Längsachse neben der Manteleinheit angeordnet.

In einer Ausführungsform des Spindeltriebs ist die Spindelmutter drehend antreibbar und in der Antriebseinheit gelagert, wobei sich die Spindelmutter relativ zur Gewindespindel dreht und dadurch, dank des gewindemäßigen Eingriffs von Spindelmutter und Gewindespindel, die Gewindespindel translatorisch relativ zur Spindelmutter in Richtung der Kuppelachse verlagert.

In einer alternativen Ausführungsform des Spindeltriebs ist die Gewindespindel drehend antreibbar und in der Antriebseinheit gelagert, wobei sich die Gewindespindel relativ zur Spindelmutter dreht und dadurch, dank des gewindemäßigen Eingriffs von Spindelmutter und Gewindespindel, die Spindelmutter translatorisch relativ Gewindespindel zur in Richtung der Kuppelachse verlagert.

Soweit im Folgenden von der Kuppelstange die Rede ist, ist damit eine Gewindespindel umfasst, und die Kuppelachse bezeichnet die Spindelachse, und umgekehrt.

Alternativ ist es auch denkbar und möglich, dass die Kuppelstange zumindest teilweise als Zahnstange ausgebildet ist, oder ein Kraftübertragungselement oder einen Aktuator eines alternativen linearen Verstellkonzepts umfasst, beispielsweise eine Kolbenstange eines fluidgetriebenen Verstellantriebs, oder ein elektromechanisches Verstellelement.

Bevorzugt kann es vorgesehen sein, dass die Mantelrohre teleskopierbar ineinander angeordnet sind. Besonders bevorzugt sind die Mantelrohre koaxial teleskopierbar zueinander angeordnet.

Bevorzugt kann vorgesehen sein, dass die Auslenkungsbegrenzungsvorrichtung einen Stützarm aufweist, über den die Kuppelstange an der Manteleinheit abstützbar ist. Der Stützarm stützt und hält die Kuppelstange in einem definierten Abstand zur Manteleinheit. Der Stützarm erzeugt eine starre Kopplung quer zur Längsachse zwischen der Kuppelstange und der Manteleinheit, bevorzugt zwischen der Kuppelstange und mindestens einem der Mantelrohre. Die bei großer axialer Druckkraft durch die Knickspannung in der Kuppelstange auftretenden, quer zur Kupplung- bzw. Längsachse gerichteten Quer- oder Biegekräfte werden über den Stützarm auf die Manteleinheit, bevorzugt auf mindestens eines der Mantelrohre übertragen. Dadurch ist die Kuppelstange gegen übermäßige Durchbiegung gesichert.

Der Stützarm kann an der Manteleinheit, vorzugsweise an einem der Mantelrohre fest angebracht, und axialer Richtung fixiert sein. Mit der Kuppelstange kann eine linear verschiebbare Lagerung ausgebildet sein, die eine relative Bewegung der Kuppelstange zum Stützarm und zur Manteleinheit zulässt. Der Stützarm kann beispielsweise quer zur Längsachse, d.h. radial abstehend an einem Mantelrohr festgelegt sein. Es ist ebenfalls möglich, dass der Stützarm in axialer Richtung an der Kuppelstange fixiert ist, und an der Manteleinheit in axialer Richtung bewegbar gelagert ist. Alternativ oder zusätzlich ist es denkbar und möglich, dass der Stützarm relativ zur Manteleinheit und zur Kuppelstange axial verschieblich gelagert ist. Dadurch kann eine Art schwimmende Abstützung realisiert sein, welche die auftretenden Querkräfte zwischen der Kuppelstange und der Manteleinheit überträgt.

An einer Gewindespindel ist der Stützarm bevorzugt in ihrem freien Abschnitt zwischen der Spindelmutter und der axial festen Verbindung mit einem Mantelrohr angeordnet.

Bevorzugt umgreift die Führungsöffnung die Kuppelstange mit mehr als 180°, besonders bevorzugt umgreift die Führungsöffnung die Kuppelstange vollständig, wobei die Führungsöffnung eine geschlossene Öffnung bildet, durch welche die Kuppelstange hindurchgeführt ist. Durch die Umgreifung ist die Kuppelstange an der Auslenkungsbegrenzungsvorrichtung gelagert. Es wird eine quer zur Kuppelachse wirksame formschlüssige Verbindung zwischen der Kuppelstange und der Auslenkungsbegrenzungsvorrichtung erzeugt. Beträgt die Umgreifung mehr als 180°, insbesondere 360° bei der vollständigen Umgreifung, können Querkräfte in jeder Richtung quer zur Längsachse von der Kuppelstange über die Führungsöffnung auf die Auslenkungsbegrenzungsvorrichtung übertragen werden. Dies ist insbesondere vorteilhaft, da die durch die Knickspannung erzeugten Querkräfte keine definierte Richtung haben, und prinzipiell von der Kuppelachse aus gesehen radial in jede Richtung weisen können.

Es ist auch denkbar und möglich, dass die Kuppelstange entlang der Kuppelachse leicht gebogen ist, also diese bogenförmig entlang der Kuppelachse ist, bevorzugt mit einem Winkel kleiner 5°, besonders bevorzugt kleiner 3°. Dadurch kann vorbestimmt werden, in welche Richtung die Kuppelstange bei einer hohen Last ausknicken wird, so dass auch eine Auslenkungsbegrenzungsvorrichtung realisierbar ist, die die Kuppelstange mit weniger als 180° umgreift. Bevorzugt umgreift die Auslenkungsbegrenzungsvorrichtung die Kuppelstange um wenigstens 90°.

Bevorzugt kann die Führungsöffnung als Durchgangsöffnung in einem Stützarm ausgebildet sein. Der Stützarm kann in einem von der Durchgangsöffnung entfernten Bereich an einem Mantelrohr angebracht sein. Mit dem Mantelrohr kann der Stützarm fest verbunden sein. Es ist ebenfalls möglich, dass der Stützarm an einem Mantelrohr axial, d.h. in Richtung der Längsachse bewegbar gelagert ist.

Ist die Auslenkungsbegrenzungsvorrichtung im Gewindebereich einer zumindest teilweise als Gewindespindel ausgebildeten Kuppelstange angeordnet, ist kann die Durchgangsöffnung größer dem Gewinde-Außendurchmesser.

Es kann vorgesehen sein, dass die Auslenkungsbegrenzungsvorrichtung kraftschlüssig mit der Kuppelstange verbunden ist. Dadurch, dass die Auslenkungsbegrenzungsvorrichtung axial, in Richtung der Kuppelachse kraftschlüssig, beispielsweise reibschlüssig mit der Kuppelstange verbunden ist, kann beim Verstellen die Auslenkungsbegrenzungsvorrichtung, beispielsweise ein Stützarm, in der Verstellrichtung mitgeschleppt werden.

Es kann vorgesehen sein, dass ein Mantelrohr als Außenmantelrohr ausgebildet ist, in dem mindestens ein Mantelrohr als Innenmantelrohr angeordnet ist. In dieser Ausführung bilden die beiden Mantelrohre eine zweiteilige Teleskopanordnung, wobei der Verstellantrieb mit der Antriebseinheit an dem einen Mantelrohr angreift, und über die Kuppelstange mit dem anderen, relativ dazu teleskopierend verstellbaren Mantelrohr verbunden ist. Die erfindungsgemäße Auslenkungsbegrenzungsvorrichtung kann beispielsweise als Stützarm an einem der Mantelrohre angebracht sein.

Es ist weiterhin möglich, dass koaxial zwischen dem Außenmantelrohr und dem Innenmantelrohr mindestens ein Zwischenmantelrohr angeordnet ist. Mit einem zwischengeschalteten Zwischenmantelrohr wird eine dreiteilige Teleskopanordnung gebildet, die einen größeren Verstellbereich und/oder eine kürzere Bauform ermöglicht. Es können auch zwei oder mehr teleskopartig geschachtelte Zwischenmantelrohre für eine mehrteilige Teleskopanordnung vorgesehen sein.

Die erfindungsgemäße Auslenkungsbegrenzungsvorrichtung kann bevorzugt an einem Zwischenmantelrohr angeordnet sein, beispielsweise als Stützarm, der mit einem Zwischenmantelrohr fest verbunden ist. Der Verstellantrieb kann zwischen dem Außen- und Innenmantelrohr angeordnet sein, so dass die Kuppelstange, beispielsweise eine Gewindespindel, sich über das Zwischenmantelrohr hinaus axial bis zum Innenmantelrohr erstreckt, welches seinerseits aus dem besagten Zwischenmantelrohr vorsteht. Das Zwischenmantelrohr ist somit über die Auslenkungsbegrenzungsvorrichtung mit der Kuppelstange verbunden. Vorteilhaft ist daran, dass durch Knickspannung erzeugte Querkräfte von dem Zwischenmantelrohr abgestützt werden können, wodurch das Innenmantelrohr entlastet wird.

Es ist weiterhin möglich, dass die Auslenkungsbegrenzungsvorrichtung axial reibschlüssig mit der Kuppelstange verbunden ist. Dadurch kann beim Verstellen das mit der Auslenkungsbegrenzungsvorrichtung verbundene Zwischenmantelrohr durch die Reibungskraft zwischen Kuppelstange und Auslenkungsbegrenzungsvorrichtung in der Verstellrichtung mitgenommen werden. Dadurch kann ohne zusätzlichen Aufwand ein vergleichmäßigter Auszug eines Mehrfach-Teleskops realisiert werden.

Vorzugsweise kann ein Stützarm einer erfindungsgemäßen Auslenkungsbegrenzungsvorrichtung in einem aus dem Außenmantelrohr vorstehenden Endbereich eine Zwischenmantelrohrs angeordnet sein. Dadurch kann das Zwischenmantelrohr in das Außenmantelrohr eingefahren werden, bis der Stützarm an dem Außenmantelrohr anschlägt.

Besonders vorteilhaft ist die erfindungsgemäße Auslenkungsbegrenzungseinrichtung, wenn die Mantelrohre zueinander um mindestens 50mm verstellbar sind. Mit anderen Worten ist die erfindungsgemäße Auslenkungsbegrenzungseinrichtung besonders vorteilhaft, wenn der mögliche Verstellweg eines ersten Mantelrohrs gegenüber einem zweiten Mantelrohr mindestens 50mm beträgt. Der mögliche Verstellweg ist die Differenz zwischen der Länge der Mantelrohre in voll ausgefahrener Stellung und der Länge der Mantelrohre in voll eingefahrener Stellung. In einer besonders vorteilhaften Weiterbildung ist der Verstellweg größer als 75mm. In einer weiteren besonders vorteilhaften Weiterbildung ist der Verstellweg größer als 100mm.

Es ist vorteilhaft, wenn die Kuppelstange mindestens gleich lang oder länger als der mögliche Verstellweg ist.

Insbesondere bei Lenksäulen mit einem großen Verstellweg, also größer 50mm, ist die Gefahr eines Knickens der Kuppelstange besonders groß, so dass der Einsatz der erfindungsgemäße Auslenkungsbegrenzungseinrichtung besonders vorteilhaft ist.

Es kann vorgesehen sein, dass die Lenksäule genau eine Auslenkungsbegrenzungseinrichtung aufweist.

Alternativ kann es vorgesehen sein, dass die Lenksäule zwei oder mehr als zwei Auslenkungsbegrenzungseinrichtungen aufweist, wobei diese zueinander beabstandet sind. Die Auslenkungsbegrenzungseinrichtungen sind in Richtung der Kuppelachse zueinander beabstandet angeordnet, die bevorzugt an einem der Mantelrohre angeordnet ist.

Bevorzugt kann die Auslenkungsbegrenzungsvorrichtung ein metallischen Werkstoff oder einen Kunststoff umfassen.

Eine vorteilhafte Weiterbildung ist, dass zwischen dem Verstellantrieb und der Manteleinheit eine Energieabsorptionseinrichtung angeordnet ist. Wird im Crashfall durch einen auf das Lenkrad auftreffenden Körper eine hohe Kraft in Längsrichtung auf die Lenkspindel ausgeübt, die einen vorgegebenen Grenzwert überschreitet, werden die Mantelrohre teleskopartig zusammengeschoben. In der Energieabsorptionseinrichtung, welche über den Verstellantrieb zwischen den Mantelrohren eingekoppelt ist, wird die durch die relative Bewegung eingeleitete kinetische Energie absorbiert und in Verformungsarbeit umgewandelt, so dass der auf das Lenkrad auftreffende Körper kontrolliert abgebremst wird und die Verletzungsgefahr verringert wird.

Die Energieabsorptionseinrichtung kann ein direkt oder mittelbar zwischen dem Verstellantrieb und der Manteleinheit oder der Trageinheit angeordnetes Energieabsorptionselement aufweisen. Ein Deformationsabschnitt des Energieabsorptionselement wird durch die relative Bewegung zwischen Außenmantel und Stelleinheit in Crashfall unter Absorption kinetischer Energie plastisch deformiert, beispielsweise durch Umbiegen einer Biegelasche, Auftrennen einer Reißlasche, Aufweiten eines Schlitzes oder dergleichen. Derartige und weitere Energieabsorptionselemente sowie Kombinationen davon sind aus dem Stand der Technik prinzipiell bekannt.

Die Energieabsorptionseinrichtung liegt im längs gerichteten Kraftfluss im Crashfall zwischen relativ zueinander verstellbaren Mantelrohren. Es ist ebenfalls möglich, dass der Verstellantrieb über ein Energieabsorptionselement mit der Manteleinheit und/oder der Trageinheit verbunden ist, welches beispielsweise zwischen der Antriebseinheit und der Manteleinheit, oder zwischen der Kuppelstange und einem Mantelrohr eingegliedert ist.

Es kann weiterhin vorgesehen sein, dass zwischen dem Verstellantrieb und der Manteleinheit oder der Trageinheit ein Sollbruchelement angeordnet ist. Das Sollbruchelement wird beim Überschreiten einer definierten, hohen Grenzkraft in Längsrichtung bzw. losgebrochen und gibt dann die relative Bewegung zur Verformung eines Energieabsorptionselements frei. Es kann beispielsweise als Scherstift ausgebildet sein. Durch das kontrollierte Losbrechen kann das Ansprechverhalten der Energieabsorption definiert vorgegeben werden, so dass die Energieabsorptionsvorrichtung ausschließlich im Crashfall mechanisch beansprucht wird, wodurch die Funktionssicherheit erhöht wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer Ansicht von unten,
- Figur 3: eine Querschnittsansicht (A-A) der Lenksäule gemäß Figur 1 oder 2,
- Figur 4: eine Querschnittsansicht wie in Figur 3 der Lenksäule in einer zweiten Ausführungsform,
- Figur 5: eine erfindungsgemäße Lenksäule in einer dritten Ausführung in einer Ansicht wie in Figur 2,

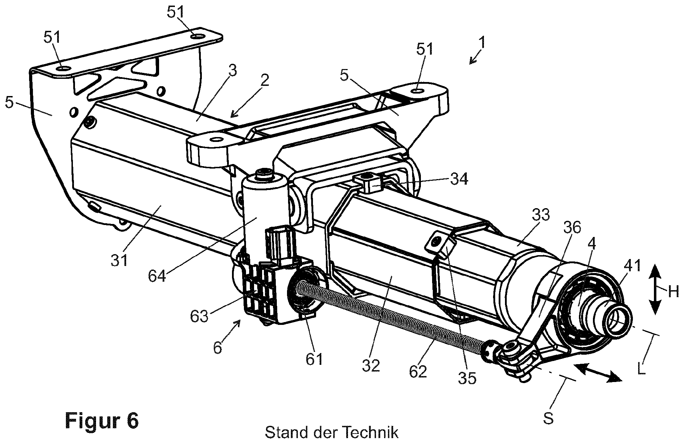

- Figur 6: eine Lenksäule gemäß dem Stand der Technik in einer schematischen perspektivischen Ansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

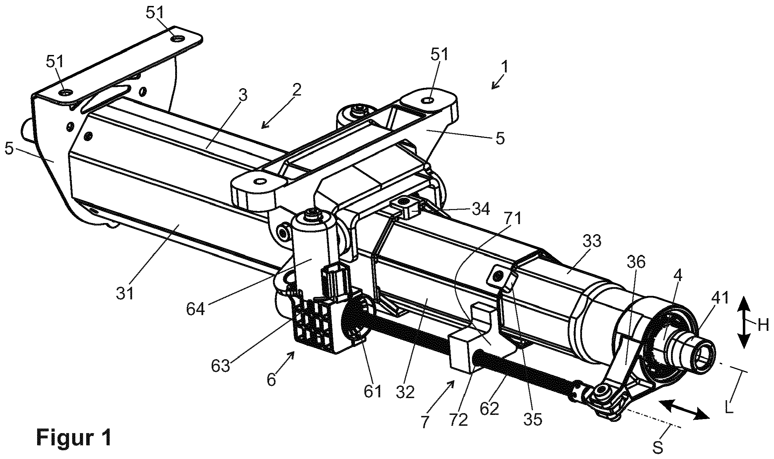

Figur 1 zeigt eine erfindungsgemäße Lenksäule 1, die eine Stelleinheit 2 aufweist, in einer Ansicht bezüglich der Fahrtrichtung von schräg hinten dargestellt.

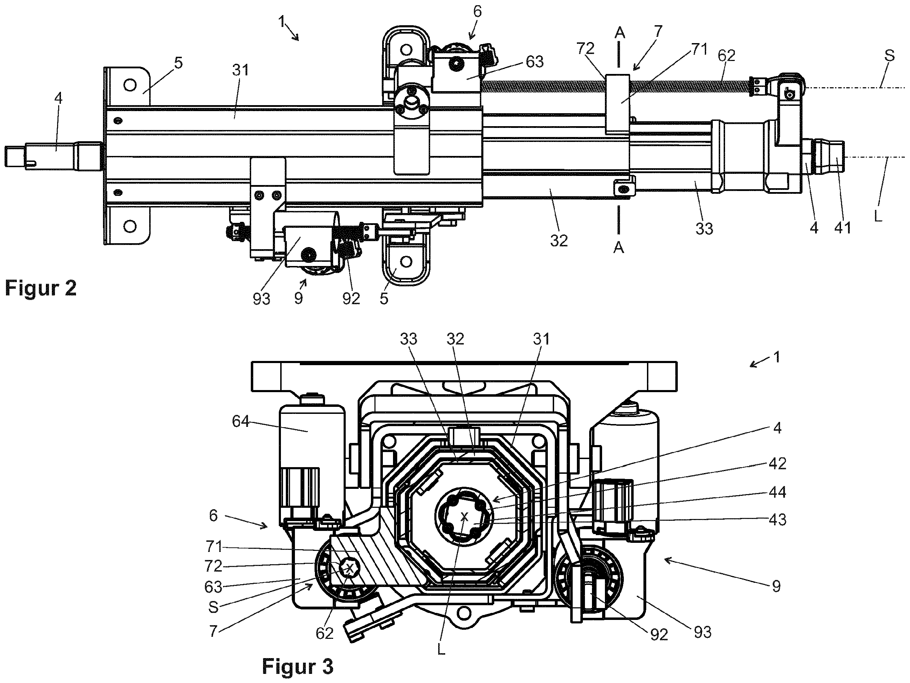

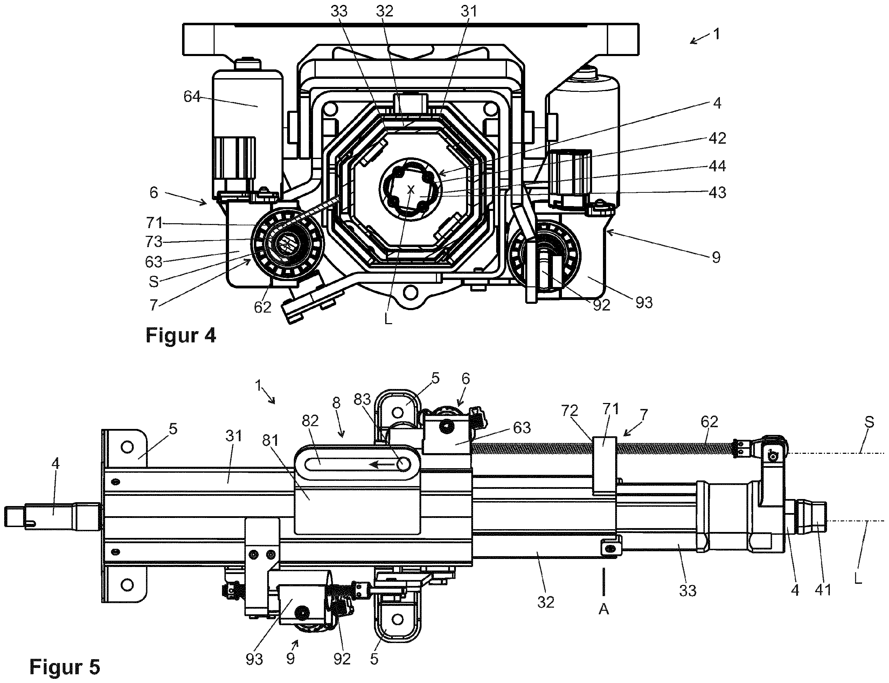

Figur 2 zeigt eine Ansicht der Lenksäule 1 von unten, Figur 3 einen Querschnitt A-A aus Figur 2, und Figur 4 zeigt einen Querschnitt ähnlich dem Querschnitt der Figur 3, jedoch in einer zweiten Ausführungsform.

Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind axial, in Achsrichtung einer Längsachse L, koaxial ineinander teleskopierend verstellbar angeordnet, wie mit einem Doppelpfeil angedeutet.

An dem Außenmantelrohr 31 ist am hinteren Ende ein Anschlag 34 angebracht, der am offenen Ende nach innen in den Zwischenraum zwischen Außenmantelrohr 31 und Zwischenmantelrohr 32 vorsteht. Beim Herausfahren schlägt das Zwischenmantelrohr 32 axial gegen den Anschlag 34 an, und ist gegen eine Trennung vom Außenmantelrohr 31 gesichert. Am hinteren Ende des Zwischenmantelrohrs 32 ist ein nach innen in den Zwischenraum zwischen Zwischenmantelrohr 32 und Innenmantelrohr 33 vorstehender Anschlag 35 angebracht, der das Innenmantelrohr 33 gegen Herausziehen aus dem Zwischenmantelrohr 32 sichert.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Lenkspindel 4 ist ebenfalls teleskopierbar ausgebildet, wie aus dem Querschnitt in Figur 3 oder 4 entnehmbar ist. Die Lenkspindel 4 weist eine Außenwelle 42 auf, in die bezüglich einer Drehung um die Achse L formschlüssig, in Längsrichtung teleskopierbar eine Innenwelle 43 eingreift, wobei dazwischen eine Führungshülse 44 zur Bildung einer leichtgängigen Gleit- oder Wälzlagerführung eingesetzt ist.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 zur teleskopierenden Längsverstellung weist einen Spindeltrieb mit einer Spindelmutter 61 und einer darin eingeschraubten Gewindespindel 62 auf, die in einer Antriebseinheit 63 von einem elektrischen Motor 64 relativ zueinander drehend antreibbar sind. Die Gewindespindel 62 bildet eine Koppelstange, die sich entlang ihrer Spindelachse S, welche die Koppelachse darstellt, parallel zur Längsachse L erstreckt. Die Gewindespindel 62 ist an ihrem freien Ende an einem Arm 36 drehfest und axial fest abgestützt mit dem Innenmantelrohr 33 verbunden, und die Spindelmutter 61 stützt sich über die Antriebseinheit 63 axial, d.h. in der Längsrichtung, an dem Außenmantelrohr 31 ab. Die Längsrichtung entspricht der Richtung der Längsachse L. Durch eine relative Drehung mittels des Motors 64 werden die Gewindespindel 62 und die Spindelmutter 61 je nach Drehrichtung zusammen oder auseinander bewegt, wodurch das Innenmantelrohr 33 axial in das Zwischenmantelrohr 32, und dieses in das Außenmantelrohr 31 eingefahren oder ausgefahren wird, wie mit dem Doppelpfeil angedeutet. Dadurch kann ein an dem Anschlussabschnitt 41 angebrachtes Lenkrad nach vorn in eine Verstauposition gebracht werden, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ könnte sich die Spindelmutter 61 an dem Innenmantelrohr 33, und die Gewindespindel 62 an dem Außenmantelrohr 31 abstützen.

Eine erfindungsgemäße Auslenkungsbegrenzungsvorrichtung 7 weist einen Stützarm 71 auf, der an dem Zwischenmantelrohr 32 fest angebracht und axialer Richtung fixiert ist. Der Stützarm 71 steht quer zur Längsachse L ab, und weist eine koaxial zur Spindelachse S ausgebildete Führungsöffnung 72 auf.

Die Gewindespindel 62 erstreckt sich in ihrem freien Bereich zwischen der Spindelmutter 61 und der Befestigung an dem Arm 36 durch die Führungsöffnung hindurch, und ist axial in Richtung der Spindelachse S linear verschiebbar relativ zum Stützarm 71 gelagert. Zwischen dem Außenumfang der Gewindespindel 61 und dem Innenumfang der Führungsöffnung 72 ist ein definiertes Spiel vorgegeben.

Die Führungsöffnung 72 umschließt die Gewindespindel 62 vollständig. Dadurch bildet der Stützarm 71 ein quer zur Längsachse L bzw. quer zur Spindelachse S formschlüssig wirkendes Halte- und Stützelement. Die Gewindespindel 62 kann sich folglich bei einer hohen Belastung nur so weit durchbiegen bzw. ausknicken, bis sie durch die Biegung im Bereich des Stützarms 71 bewirkte Auslenkung quer zur Spindelachse S innen in der Führungsöffnung 72 anschlägt. Mit anderen Worten ist die maximal mögliche Durchbiegung durch das Spiel der Gewindespindel 62 in der Führungsöffnung 72 begrenzt.

Das Spiel kann auch so bemessen sein, dass zwischen der Gewindespindel 62 und der Führungsöffnung 72 ein axial in Richtung der Spindelachse S wirksamer Reibschluss erzeugt wird. Durch auftretende Reibkraft wird der Stützarm 71 die beim Verstellen von der Gewindespindel mitgenommen, so dass auch das Zwischenmantelrohr 32 beim Auseinander- und Zusammenfahren der Manteleinheit 3 axial mitbewegt wird.

Durch die geschlossene, die Gewindespindel 62 allseitig umschließende Führungsöffnung 72 in der in Figur 3 gezeigten Ausführung des Stützarms 71 ist die Gewindespindel 62 gegen Durchbiegung in sämtliche Radialrichtungen quer zur Spindelachse S gesichert.

In Figur 4 ist eine Variante gezeigt, in der der Stützarm 71 als Formteil, bevorzugt als Blechformteil ausgebildet ist. Die Führungsöffnung 72 ist dabei in einem bogenförmigen Bügel 73 realisiert, der die Gewindestange nur teilweise umgreift, im gezeigten Beispiel etwa zwischen 150° und 190°. Der Bügel 73 kann besonders leicht sein, was einem geringen Gesamtgewicht der Lenksäule 1 entgegenkommt, und als Blechformteil rationell gefertigt werden.

In Figur 5 ist eine Weiterbildung einer Lenksäule 1 gemäß der Figuren 1 bis 4 dargestellt, wobei zusätzlich zwischen dem Verstellantrieb 7 und der Manteleinheit 3 eine Energieabsorptionsvorrichtung 8 eingesetzt ist. Die umfasst ein an dem Außenmantelrohr 31 fest angebrachtes Energieabsorptionselement 81, welches einen in Richtung der Längsachse L langgestreckten Schlitz 82 mit einer vorgegebenen Schlitzbreite aufweist. Die Antriebseinheit 63 des Verstellantriebs 6 weist einen Dorn 83 auf, der in den besagten Schlitz 82 eingreift, wobei der Dorn 83 im Querschnitt größer ist als die Schlitzbreite. Wird nun im Crashfall über das Lenkrad, beispielsweise durch einen aufprallenden Körper, eine hohe Crashkraft axial auf das Innenmantelrohr 33 ausgeübt, wird diese Crashkraft über den Arm 36 und die Gewindespindel 62 auf die Antriebseinheit 63 übertragen. Dadurch wird der Dorn 83 axial belastet und in dem Schlitz 82 entlangbewegt, wie in Figur 5 mit dem Pfeil eingezeichnet. Durch das Übermaß des Dorns 83 wird dabei der Schlitz 82 entlang der Bewegung des Dorns 83 plastisch aufgeweitet. Dadurch wird die durch den Crash eingetragene kinetische Energie in Verformungsarbeit umgewandelt und absorbiert, so dass der aufprallende Körper über die Länge des Schlitzes 82 kontrolliert abgebremst wird. Dadurch wird das Verletzungsrisiko des Fahrzeugführers im Crashfall vermindert. Damit die Energieabsorption kontrolliert im Crashfall ablaufen kann, wird durch die Auslenkungsbegrenzungsvorrichtung 7 ein Ausknicken der Gewindespindel 62 wirksam verhindert. Somit lässt sich dank der erfindungsgemäßen Auslenkungsbegrenzungsvorrichtung 7 auch ein höheres Energieabsorptionsniveau bereitstellen, da das Ausknicken oder ungewollte Verbiegen der Gewindespindel 62 im Crashfall wirksam vermieden oder zumindest begrenzt wird.

Das Energieabsorptionselement 8 kann als leichtes Blechformteil kostengünstig gefertigt sein.

Zur Höhenverstellung kann ein zweiter Verstellantrieb 9 vorgesehen sein, der ebenfalls als Spindeltrieb ausgebildet sein kann. Dieser kann so eingegliedert sein, dass die Antriebseinheit 83 sich an der Manteleinheit 3 abstützt und die Gewindespindel 92 an der Trageinheit 5 angreift, so dass eine motorische Verstellung in der Höhenrichtung H ermöglicht wird.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34, 35: Anschlag
- 36: Arm
- 4: Lenkspindel
- 41: Anschlussabschnitt
- 42: Außenwelle
- 43: Innenwelle
- 44: Führungshülse
- 5: Trageinheit
- 51: Befestigungsmittel
- 6, 9: Verstellantrieb
- 61, 91: Spindelmutter
- 62, 92: Gewindespindel
- 63, 93: Antriebseinheit
- 64: Motor
- 7: Auslenkungsbegrenzungsvorrichtung
- 71: Stützarm
- 72: Führungsöffnung
- 73: Bügel
- 8: Energieabsorptionsvorrichtung
- 81: Energieabsorptionselement
- 82: Schlitz
- 83: Dorn 83

- L: Längsachse
- S: Spindelachse

## Patentansprüche

1. Motorisch verstellbare Lenksäule (1) für ein Kraftfahrzeug, umfassend eine mit einer Fahrzeugkarosserie verbindbare Trageinheit (5), von der eine Stelleinheit (2) gehalten wird, die eine in einer Manteleinheit (3) um eine Längsachse (L) drehbar gelagerte Lenkspindel (4) umfasst, wobei die Manteleinheit (3) mindestens zwei relativ zueinander verstellbare Mantelrohre (31, 32, 33) aufweist, die mit einem Verstellantrieb (6) verbunden sind, der eine entlang ihrer Kuppelachse (S) erstreckte Kuppelstange (62) aufweist, die an relativ zueinander verstellbaren Mantelrohren (31, 32, 33) angreift, und die mit einer motorischen Antriebseinheit (63) wirkverbunden ist, und von der Antriebseinheit (63) relativ zu mindestens einem der Mantelrohre (31, 32, 33) verstellbar ist, wobei zwischen der Manteleinheit (3) und der Kuppelstange (62) eine Auslenkungsbegrenzungsvorrichtung (7) angeordnet ist,
**dadurch gekennzeichnet,**
**dass** die Auslenkungsbegrenzungsvorrichtung (7) eine Auslenkung der Kuppelstange (63) quer zur Kuppelachse (S) begrenzt, wobei die Auslenkungsbegrenzungsvorrichtung (7) eine Führungsöffnung (72) aufweist, welche die Kuppelstange (62) zumindest teilweise umgreift, wobei die Kuppelstange (62) in der Führungsöffnung (72) ein definiertes Spiel hat, so dass ein loser Formschluss in Querrichtung realisiert wird.

2. Lenksäule nach Anspruch 1, **dadurch gekennzeichnet, dass** die Kuppelstange (62) eine Gewindespindel (62) aufweist, die in eine Spindelmutter (61) eingreift, und von der Antriebseinheit (63) um ihre Spindelachse (S) relativ zur Spindelmutter (61) drehend antreibbar ist, wobei die Gewindespindel (62) und die Spindelmutter (61) an relativ zueinander verstellbaren Mantelrohren (31, 32, 33) angreifen.

3. Lenksäule nach einem der vorangehenden Ansprüche, **dadurch gekennzeichnet, dass** die Auslenkungsbegrenzungsvorrichtung (7) einen Stützarm (71) aufweist, über den die Kuppelstange (62) an der Manteleinheit (3) abstützbar ist.

4. Lenksäule nach einem der vorangehenden Ansprüche, **dadurch gekennzeichnet, dass** ein Mantelrohr (31, 32, 33) als Außenmantelrohr (31) ausgebildet ist, in dem mindestens ein Mantelrohr als Innenmantelrohr (33) angeordnet ist.

5. Lenksäule nach Anspruch 4, **dadurch gekennzeichnet, dass** koaxial zwischen dem Außenmantelrohr (31) und dem Innenmantelrohr (33) mindestens ein Zwischenmantelrohr (32) angeordnet ist.

6. Lenksäule nach Anspruch 5, **dadurch gekennzeichnet, dass** die Auslenkungsbegrenzungsvorrichtung (7) an dem Zwischenmantelrohr (32) angebracht ist.

7. Lenksäule nach einem der vorangehenden Ansprüche, **dadurch gekennzeichnet, dass** zwischen dem Verstellantrieb (6) und der Manteleinheit (3) eine Energieabsorptionseinrichtung (8) angeordnet ist.

## Claims

1. Motor-adjustable steering column (1) for a motor vehicle, comprising a support unit (5) which can be connected to a vehicle body and by which an actuating unit (2) is held, which comprises a steering spindle (4) which is mounted rotatably about a longitudinal axis (L) in a casing unit (3), the casing unit (3) having at least two casing tubes (31, 32, 33) which can be adjusted relative to one another and are connected to an adjustment drive (6), which has a coupling rod (62) extending along its coupling axis (S), which engages on casing tubes (31, 32, 33) which are adjustable relative to one another, and which is operatively connected to a motorized drive unit (63) and can be adjusted by the drive unit (63) relative to at least one of the casing tubes (31, 32, 33), a deflection limiting device (7) being arranged between the casing unit (3) and the coupling rod (62),
**characterized in**
**in that** the deflection-limiting device (7) limits a deflection of the coupling rod (63) transversely to the coupling axis (S), the deflection-limiting device (7) having a guide opening (72) which at least partially embraces the coupling rod (62), the coupling rod (62) having a defined play in the guide opening (72), so that a loose form fit is realized in the transverse direction.

2. Steering column according to claim 1, **characterized in that** the coupling rod (62) has a threaded spindle (62) which engages in a spindle nut (61) and can be driven by the drive unit (63) in rotation about its spindle axis (S) relative to the spindle nut (61), the threaded spindle (62) and the spindle nut (61) engaging on casing tubes (31, 32, 33) which are adjustable relative to one another.

3. Steering column according to one of the preceding claims, **characterized in that** the deflection limiting device (7) has a support arm (71) via which the coupling rod (62) can be supported on the jacket unit (3).

4. Steering column according to one of the preceding claims, **characterized in that** a jacket tube (31, 32, 33) is designed as an outer jacket tube (31) in which at least one jacket tube is arranged as an inner jacket tube (33).

5. Steering column according to claim 4, **characterized in that** at least one intermediate casing tube (32) is arranged coaxially between the outer casing tube (31) and the inner casing tube (33).

6. Steering column according to claim 5, **characterized in that** the deflection limiting device (7) is attached to the intermediate casing tube (32).

7. Steering column according to one of the preceding claims, **characterized in that** an energy absorption device (8) is arranged between the adjustment drive (6) and the casing unit (3).

## Revendications

1. Colonne de direction (1) réglable par moteur pour un véhicule automobile, comprenant une unité de support (5) pouvant être reliée à une carrosserie de véhicule, par laquelle est maintenue une unité de réglage (2) qui comprend un arbre de direction (4) logé dans une unité d'enveloppe (3) de manière à pouvoir tourner autour d'un axe longitudinal (L), l'unité d'enveloppe (3) présentant au moins deux tubes d'enveloppe (31, 32, 33) réglables l'un par rapport à l'autre, qui sont reliés à un entraînement de réglage (6), qui présente une tige d'accouplement (62) s'étendant le long de son axe d'accouplement (S), qui s'engage sur des tubes d'enveloppe (31, 32, 33) réglables l'un par rapport à l'autre, et qui est en liaison active avec une unité d'entraînement motorisée (63), et qui peut être réglée par l'unité d'entraînement (63) par rapport à au moins l'un des tubes d'enveloppe (31, 32, 33), un dispositif de limitation de débattement (7) étant disposé entre l'unité d'enveloppe (3) et la tige d'accouplement (62),
**caractérisé en ce que**
**en ce que** le dispositif de limitation de déviation (7) limite une déviation de la tige d'accouplement (63) transversalement à l'axe d'accouplement (S), le dispositif de limitation de déviation (7) présentant une ouverture de guidage (72) qui entoure au moins partiellement la tige d'accouplement (62), la tige d'accouplement (62) ayant un jeu défini dans l'ouverture de guidage (72), de sorte qu'une liaison par complémentarité de forme lâche est réalisée dans la direction transversale.

2. Colonne de direction selon la revendication 1, **caractérisée en ce que** la barre d'accouplement (62) présente une broche filetée (62) qui s'engage dans un écrou de broche (61) et peut être entra née en rotation par l'unité d'entra nement (63) autour de son axe de broche (S) par rapport à l'écrou de broche (61), la broche filetée (62) et l'écrou de broche (61) s'engageant sur des tubes d'enveloppe (31, 32, 33) réglables les uns par rapport aux autres.

3. Colonne de direction selon l'une des revendications précédentes, **caractérisée en ce que** le dispositif de limitation de débattement (7) comporte un bras d'appui (71) par l'intermédiaire duquel la tige d'accouplement (62) peut prendre appui sur l'unité d'enveloppe (3).

4. Colonne de direction selon l'une des revendications précédentes, **caractérisée en ce qu'**un tube d'enveloppe (31, 32, 33) est réalisé sous forme de tube d'enveloppe extérieur (31), dans lequel est disposé au moins un tube d'enveloppe sous forme de tube d'enveloppe intérieur (33).

5. Colonne de direction selon la revendication 4, **caractérisée en ce qu'**au moins un tube d'enveloppe intermédiaire (32) est disposé coaxialement entre le tube d'enveloppe extérieur (31) et le tube d'enveloppe intérieur (33).

6. Colonne de direction selon la revendication 5, **caractérisée en ce que** le dispositif de limitation de débattement (7) est monté sur le tube d'enveloppe intermédiaire (32).

7. Colonne de direction selon l'une des revendications précédentes, **caractérisée en ce qu'**un dispositif d'absorption d'énergie (8) est disposé entre l'entraînement de réglage (6) et l'unité d'enveloppe (3).
